# EUROPÄISCHE PATENTSCHRIFT

(11) **EP 3 999 367 B1**
(45) Veröffentlichungstag und Bekanntmachung des Hinweises auf die Patenterteilung: **10.09.2025**
(21) Anmeldenummer: 20743640.3
(22) Anmeldetag: 16.07.2020
(51) Int. Cl.: B60K 1/00, B60K 11/02, F01P 7/16, F01P 3/12, F01P 7/14

(54) **THERMOMANAGEMENTSYSTEM, FAHRZEUG UND VERFAHREN ZUM BETREIBEN ZWEIER KÜHLKREISLÄUFE EINES THERMOMANAGEMENTSYSTEMS**
THERMAL MANAGEMENT SYSTEM, VEHICLE AND METHOD FOR OPERATING TWO COOLING CIRCUITS OF A THERMAL MANAGMENT SYSTEM
SYSTÈME DE GESTION THERMIQUE, VÉHICULE ET PROCÉDÉ POUR FAIRE FONCTIONNER DEUX CIRCUITS DE REFROIDISSEMENT D'UN SYSTÈME DE GESTION THERMIQUE

(30) Priorität: 17.07.2019 DE 102019210577
(43) Veröffentlichungstag der Anmeldung: 25.05.2022
(73) Patentinhaber: Schaeffler Technologies AG & Co. KG, 91074 Herzogenaurach (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE)
(74) Vertreter: Vitesco Technologies
(86) Internationale Anmeldenummer: PCT/EP2020/070216
(87) Internationale Veröffentlichungsnummer: WO 2021/009318

(56) Entgegenhaltungen:
- EP-A1- 3 088 230
- WO-A1-2018/028299
- WO-A1-2019/022023
- CN-A- 108 437 737

## Beschreibung

Die Erfindung betrifft ein Thermomanagementsystem zur Verwendung in einem Fahrzeug. Die Erfindung betrifft ferner ein Fahrzeug mit einem solchen Thermomanagementsystem. Die Erfindung betrifft ferner ein Verfahren zum Betreiben zweier Kühlkreisläufe eines solchen Thermomanagementsystems.

Unter einem Fahrzeug ist dabei jede Art von Fahrzeug zu verstehen, welches zumindest einen ersten Kühlkreislauf zur Temperierung einer Batterie und zumindest einen zweiten Kühlkreislauf zur Temperierung eines Elektromotors und einer Leistungselektronik aufweist. Dabei kann es sich um ein teilelektrisches oder vollelektrisches Fahrzeug handeln, insbesondere aber um Personenkraftwagen und/oder Nutzfahrzeuge.

In derartigen Fahrzeugen sind zwei getrennte Kühl- bzw. Wasserkreisläufe nötig. Ein erster Kühl- bzw. Wasserkreislauf wird auf niedrigerer Temperatur zur Temperierung der Batterie betrieben, während ein zweiter Kühl- bzw. Wasserkreislauf auf höherer Temperatur zur Temperierung des Elektromotors und der Leistungselektronik betrieben wird. Komplexe Regelstrategien sind dafür verantwortlich, dass die Komponenten möglichst schnell auf ihre Optimaltemperatur aufgeheizt werden, ohne später im Betrieb zu überhitzen.

Aus der EP 2392486 B1 ist ein Thermomanagementsystem der zuvor beschriebenen Art bekannt.

Ferner ist aus der EP3088230A1 ein Thermomanagementsystem der zuvor beschriebenen Art bekannt.

Eine der Erfindung zugrunde liegende Aufgabe ist es, ein solches Thermomanagementsystem zu verbessern.

Diese Aufgabe wird durch ein gemäß Anspruch 1 unter Schutz gestelltes Thermomanagementsystem gelöst. Es wird ferner ein Fahrzeug mit einem solchen Thermomanagementsystem sowie ein Verfahren zum Betreiben des Thermomanagementsystems vorgeschlagen und unter Schutz gestellt (vgl. Ansprüche 8, 9). Des Weiteren werden ein Computerprogramm sowie ein Computerprogrammprodukt unter Schutz gestellt (vgl. Ansprüche 17, 18). Vorteilhafte Ausführungsformen der Erfindung sind Gegenstand der Unteransprüche.

Es wird ein Thermomanagementsystem zur Verwendung in einem Fahrzeug vorgeschlagen, wobei das Thermomanagementsystem einen ersten Kühlkreislauf für eine Batterie und einen zweiten Kühlkreislauf für einen E-Motor zum Antrieb des Fahrzeugs umfasst. Die beiden Kühlkreisläufe sind dabei mittels eines Mehrwegeventils in einem ersten Modus des Systems und in einer ersten Ventilstellung des Mehrwegeventils in Reihe (Reihenschaltungsmodus) oder in einem zweiten Modus des Systems und in einer zweiten Ventilstellung des Mehrwegeventils parallel zueinander geschaltet (Parallelschaltungsmodus).

Es wird dabei vorgeschlagen, dass in einem dritten Modus des Systems und in einer dritten Ventilstellung das Mehrwegeventil eine Zwischenstellung einnimmt, in welcher sich die Kühlflüssigkeitsströme der beiden Kühlkreisläufe miteinander bedarfsgerecht vermischen (bedarfsgerechter Mischmodus).

Bei einer solch bedarfsgerechten Vermischung lässt sich eine Abwärme bzw. Verlustwärme des E-Motorkühlkreislaufs vorteilhafterweise an den Batteriekühlkreislauf abführen, ohne dabei ein sprunghaftes Übergangsverhalten des Systems zu erfahren, welches sich als solches beim Umschalten zwischen dem Reihenschaltungsmodus und dem Parallelschaltungsmodus einstellt und sich in Form von sprunghaften Temperatur- und Druckänderungen äußert. Zudem lassen sich bei instationären Fahrten, bei denen sich der E-Motor schnell aufheizt, häufige Umschaltungen zwischen dem Reihenschaltungsmodus und dem Parallelschaltungsmodus vermeiden.

Eine solch bedarfsgerechte Vermischung verbessert demnach eine Temperaturregelung von sowohl dem E-Motorkühlkreislauf als auch dem Batteriekühlkreislauf.

Die dritte Ventilstellung ist dabei aus einer Mehrzahl von möglichen Zwischenstellungen einstellbar. Die einzelnen Zwischenstellungen können dabei gestuft (bzw. diskontinuierlich) oder stufenlos (bzw. kontinuierlich) einstellbar sein. Eine stufenlose Einstellbarkeit begünstigt dabei die Temperaturregelung von sowohl dem E-Motorkühlkreislauf als auch dem Batteriekühlkreislauf.

In einer Ausführungsform kann das Mehrwegeventil in Gestalt eines 4/2-Wegeventils ausgebildet sein. Dabei ist im zweiten Kühlkreislauf (bzw. E-Motorkühlkreislauf) stromabwärts des E-Motors ein weiteres Mehrwegeventil vorgesehen, welches einen Kühlflüssigkeitsstrom wahlweise über einen Pfad mit einem Radiator (bzw. Kühler) bzw. Radiatorpfad und/oder einen dazu parallelen Pfad bzw. Bypass-Pfad zur Umgehung des Radiators leitet. Auch das weitere Mehrwegeventil kann dabei gestuft oder stufenlos in eine Mehrzahl von möglichen Stellungen - d.h. End- und Zwischenstellungen - einstellbar sein. Das weitere Mehrwegeventil kann dabei in Gestalt eines 3/2-Wegeventils ausgebildet sein.

In einer dazu alternativen Ausführungsform kann das Mehrwegeventil in Gestalt eines 5/3-Wegeventils ausgebildet sein, welches mit einem Bypass-Pfad des zweiten Kühlkreislaufs (bzw. E-Motorkühlkreislaufs) zur Umgehung eines Radiators (bzw. Kühlers) sowie mit einem dazu parallelen Pfad mit einem Radiator (bzw. Kühler) bzw. Radiatorpfad fluidisch verbunden ist, wobei der Bypass-Pfad sowie der Radiatorpfad einem Knotenpunkt stromabwärts des E-Motors entspringen.

Es wird ferner ein Fahrzeug mit einem Thermomanagementsystem der zuvor beschriebenen Art vorgeschlagen.

Des Weiteren wird ein Verfahren zum Betreiben zweier Kühlkreisläufe eines Thermomanagementsystems der zuvor beschriebenen Art vorgeschlagen, bei dem ein erster Kühlkreislauf für eine Batterie und ein zweiter Kühlkreislauf für einen E-Motor zum Antrieb des Fahrzeugs vorgesehen wird. Die beiden Kühlkreisläufe werden dabei mittels eines Mehrwegeventils in einem ersten Modus des Systems und in einer ersten Ventilstellung des Mehrwegeventils in Reihe oder in einem zweiten Modus des Systems und in einer zweiten Ventilstellung des Mehrwegeventils parallel zueinander geschaltet.

Es wird dabei vorgeschlagen, dass in einem dritten Modus des Systems und in einer dritten Ventilstellung das Mehrwegeventil in eine Zwischenstellung geschaltet wird, in welcher die Kühlflüssigkeitsströme der beiden Kühlkreisläufe miteinander bedarfsgerecht vermischen werden.

Dabei wird die dritte Ventilstellung aus einer Mehrzahl von möglichen Zwischenstellungen eingestellt. Die einzelnen Zwischenstellungen können dabei gestuft oder stufenlos eingestellt werden.

In einer ersten Ausführungsform wird als Mehrwegeventil ein 4/2-Wegeventil verwendet. Dabei wird im zweiten Kühlkreislauf (bzw. E-Motorkühlkreislauf) stromabwärts des E-Motors ein weiteres Mehrwegeventil verwendet, durch welches ein Kühlflüssigkeitsstrom wahlweise über einen Pfad mit einem Radiator (bzw. Kühler) bzw. Radiatorpfad und/oder einen dazu parallelen Pfad bzw. Bypass-Pfad zur Umgehung des Radiators geleitet wird. Auch das weitere Mehrwegeventil kann dabei gestuft oder stufenlos in eine Mehrzahl von möglichen Stellungen - d.h. End- und Zwischenstellungen - eingestellt werden. Für das weitere Mehrwegeventil kann dabei ein 3/2-Wegeventil verwendet werden.

In einer dazu alternativen, zweiten Ausführungsform wird als Mehrwegeventil ein 5/3-Wegeventils verwendet, welches mit einem Bypass-Pfad des zweiten Kühlkreislaufs (bzw. E-Motorkühlkreislauf) - zur Umgehung eines Radiators (bzw. Kühlers) - sowie mit einem dazu parallelen Pfad mit einem Radiator (bzw. Kühler) bzw. Radiatorpfad fluidisch verbunden wird, wobei der Bypass-Pfad sowie der Radiatorpfad einem Knotenpunkt stromabwärts des E-Motors entspringen.

Mittels der ersten Ausführungsform oder der zweiten Ausführungsform lassen sich zudem vorteilhafterweise ein vierter Modus und/oder ein fünfter Modus des Systems einstellen. Im vierten Modus (bzw. Bypass-Modus) des Systems lässt sich der Radiatorpfad zur Erwärmung der Batterie umgehen. Im fünften Modus des Systems hingegen lässt sich der Batteriekreislauf über den Radiatorpfad entwärmen, um eine Überhitzung der Batterie zu vermieden.

Es wird ferner ein Computerprogrammprodukt zur Durchführung des zuvor beschriebenen Verfahrens vorgeschlagen. Das Computerprogrammprodukt umfasst dabei Befehle, die bei der Ausführung des Programms durch einen Computer - abhängig von einer Temperaturüberwachung der beiden Kühlkreisläufe - diesen veranlassen, das zuvor beschriebene Verfahren auszuführen. Das Computerprogrammprodukt kann dabei mit einfachen Mitteln in eine Ansteuerelektronik bzw. Steuereinheit eingelesen und dann verwendet werden, um das besagte Thermomanagementsystem entsprechend zu steuern.

Die Ansteuerelektronik kann dabei eine mit einem Speichersystem und einem Bussystem datenverbundene digitale Mikroprozessoreinheit (CPU), einen Arbeitsspeicher (RAM) sowie ein Speichermittel besitzen. Die CPU ist ausgebildet, Befehle, die als ein in einem Speichersystem abgelegtes Programm ausgeführt sind, abzuarbeiten, Eingangssignale vom Datenbus zu erfassen und Ausgangssignale an den Datenbus abzugeben. Das Speichersystem kann verschiedene Speichermedien in Gestalt magnetischer, Festkörper- und anderer nicht-flüchtiger Medien besitzen, auf dem ein entsprechendes Computerprogramm zur Durchführung des Verfahrens sowie der vorteilhaften Ausgestaltungen gespeichert ist. Das Programm kann derart beschaffen sein, dass es die hier beschriebenen Verfahren verkörpert bzw. auszuführen imstande ist, sodass die CPU die Schritte solcher Verfahren ausführen und damit das besagte Thermomanagementsystem steuern kann

Darüber hinaus wird ein Computerlesbares Speichermedium vorgeschlagen, umfassend Programmcode-Mittel bzw. Befehle, die auf einem computerlesbaren Datenträger gespeichert sind, um - abhängig von einer Temperaturüberwachung der beiden Kühlkreisläufe - das zuvor beschriebene Verfahren durch- bzw. auszuführen, wenn die Programmcode-Mittel auf einem Computer bzw. in einer CPU ausgeführt werden.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen:
- Fig. 1: ein Thermomanagementsystem in einer vorgeschlagenen ersten Ausführung,
- Fig. 2: einen Auszug des in Fig. 1 gezeigten Thermomanagementsystems,
- Fig. 3: ein Thermomanagementsystem in einer vorgeschlagenen zweiten Ausführung,
- Fig. 4: eine erste und zweite Veranschaulichung von Volumenströmen an einem 4/2-Wegeventil der vorgeschlagenen ersten Ausführung,
- Fig. 5: eine dritte Veranschaulichung von Volumenströmen an einem 3/2-Wegeventil der ersten Ausführung,
- Fig. 6: eine erste und zweite Veranschaulichung von Volumenströmen an einem 5/3-Wegeventil der vorgeschlagenen zweiten Ausführung und
- Fig. 7: eine dritte Veranschaulichung von Volumenströmen am 5/3-Wegeventil der zweiten Ausführung.

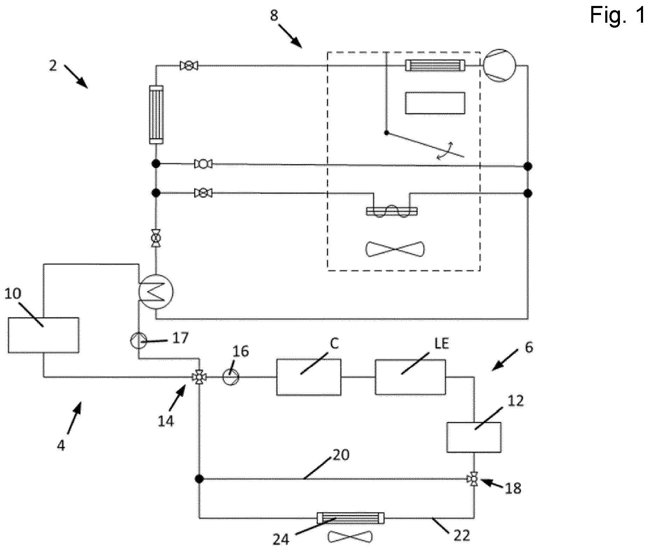

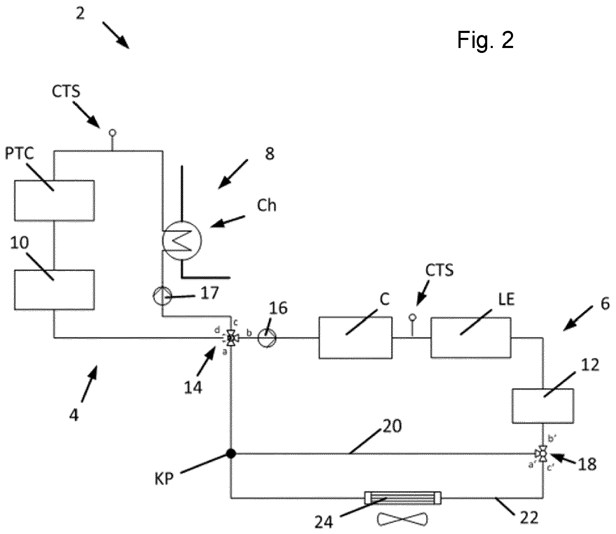

Das Thermomanagementsystem 2 nach Fig. 1 und Fig. 2 veranschaulicht einen ersten Kühlkreislauf 4 für eine Batterie 10 und einen zweiten Kühlkreislauf 6 für einen E-Motor 12 zum Antrieb des Fahrzeugs, sowie einen Kältemittelkreislauf 8 einer Klimaanlage. Bei dem Fahrzeug kann es sich dabei z.B. um ein batterieelektrisches Fahrzeug (Battery Electric Vehicle, kurz: BEV), ein Hybridelektrokraftfahrzeug (Hybrid Electric Vehicle, kurz: HEV) oder ein Brennstoffzellenfahrzeug (Fuel Cell Electric Vehicle, kurz: FCEV) handeln. Diese drei verschiedenen Kreisläufe 4, 6, 8 verschmelzen dabei gewissermaßen miteinander. In den beiden Kühlkreisläufen 4, 6 wird das jeweilige Fluid mittels einer eigenen elektrischen Pumpe 16, 17 gefördert.

Der E-Motor 12 und die Leistungselektronik LE sollen bei einer Kühlflüssigkeits- bzw. Kühlwassertemperatur von ca. 85 °C betrieben werden. Die Batterie 10 bzw. die Batteriezellen hingegen sollen in einem bestimmten Kühlflüssigkeits- bzw. Kühlwassertemperaturfenster zwischen 20 °C und 40 °C betrieben werden, denn dies stellt einen optimalen Betriebstemperaturbereich der Batterie 10 sicher. Die Temperatur der Batterie 10 bzw. der einzelnen Batteriezellen selbst kann dabei die 40 °C Temperaturschwelle durchaus überschreiten. Daher bedarf es der beiden Kühlkreisläufe 4, 6. Beide Kühlkreisläufe 4, 6 müssen Wärme sowohl aufnehmen als auch abgeben können. Während der Batteriekühlkreislauf 4 über einen Wärmtauscher Ch (vgl. Fig. 1; siehe Chiller, kurz: Ch) gegenüber dem Kältemittelkreislauf 8 entwärmt wird, kann der E-Motorkühlkreislauf 6 über einen Radiator bzw. Kühler 24 gegenüber der Umgebung entwärmt werden sowie gegenüber dem Batteriekühlkreislauf 4 über ein im Folgenden beschriebenes Mehrwegeventil 14 (Coolant Flow Control Valve, kurz: CFCV), wobei das Mehrwegeventil 14 eine Schnittstelle zwischen dem Batteriekühlkreislauf 4 und dem E-Motorkühlkreislauf 6 darstellt. Die Entwärmung des Batteriekühlkreislaufs 4 kann auch bei einer entsprechenden Ventilstellung des Mehrwegeventils 14 über den Radiator bzw. Kühler 24 erfolgen. Da aber die Batteriekühlflüssigkeit eine Temperatur von 40 °C nicht überschreiten soll, reicht meist die Entwärmung über den Radiator 24 nicht aus, so dass Wärme über den Wärmtauscher Ch abgeführt werden muss. Im E-Motorkühlkreislauf 6 ist neben dem E-Motor 12 und der Leistungselektronik LE auch noch ein Ladegerät (Charger, kurz: C) zu kühlen. Zur Regelung des jeweiligen Kühlkreislaufs 4, 6 ist je ein Temperatursensor CTS vorgesehen. Im Batteriekühlkreislauf 4 ist ferner ein Widerstandsheizer PTC vorgesehen. Der E-Motor 12 ist entweder wassergekühlt oder ölgekühlt. Im letzteren Fall ist ein entsprechender Ölkühlkreislauf des E-Motors 12 mittels eines - hier nicht dargestellten - Wärmetauschers an den Motorkühlreislauf 6 angebunden.

Mittels des Mehrwegeventils 14 lässt sich das Thermomanagementsystem 2 in unterschiedlichen Modi betreiben. Das Mehrwegeventil 14 ist dabei Teil einer sog. Aktuatoreinheit bzw. Kühlwassersteuerventileinheit, die als solche auch eine Antriebseinheit mit einem Elektrostellmotor sowie eine Steuereinheit zur Steuerung des Elektrostellmotors umfasst.

In einem **ersten Modus** des Systems (Use Case 1, kurz: UC1 = **Reihenschaltung R** mit maximaler Wärmerückgewinnung) und in einer ersten Ventilstellung des Mehrwegeventils 14 lässt sich der Kühlkreislauf 4 in Reihe zum Kühlkreislauf 6 schalten. Dabei strömt bezüglich des Mehrwegeventils 14 Kühlflüssigkeit über einen Zufluss bzw. Eingang a vom Kühlkreislauf 6 über den Abfluss bzw. Ausgang c in den Kühlkreislauf 4 und schließlich über den Zufluss bzw. Eingang d vom Kühlkreislauf 4 über den Abfluss bzw. Ausgang b zurück in den Kühlkreislauf 6.

Diese Reihenschaltung bewirkt eine schnelle Erwärmung des Batteriekühlkreislaufs 4 unter Ausnutzung der Abwärme des E-Motors 12 sowie der Leistungselektronik LE. Der E-Motorkühlkreislauf 6 hat somit auch die Funktion eines Heizkreislaufs.

In einem **zweiten Modus** des Systems (Use Case 2, kurz: UC2 = **Parallelschaltung P** mit Überhitzungsschutz) und in einer zweiten Ventilstellung des Mehrwegeventils 14 lässt sich der Kühlkreislauf 4 parallel zum Kühlkreislauf 6 schalten, so dass die beiden Kühlkreisläufe 4, 6 fluidisch voneinander getrennt sind. Diese Trennung schützt die Batterie 10 vor einer Überhitzung.

Darüber hinaus wird auch ein **dritter Modus** des Systems (Use Case 3, kurz: UC3 = **Mischmodus M** mit selektiver Wärmerückgewinnung) vorgeschlagen, in welchem das Mehrwegeventil 14 in eine Zwischenstellung - d.h. eine dritte Ventilstellung - geschaltet ist, in welcher sich die Kühlflüssigkeitsströme der beiden Kühlkreisläufe 4, 6 miteinander bedarfsweise vermischen.

Durch einen solchen Mischmodus lässt sich sowohl die Temperatur der Batterie 10 als auch die Temperatur des E-Motors 12 genauer regeln. Es unterbleiben hohe Druck- und Temperatursprünge in den beiden Kühlkreisläufen 4, 6, da ein Umschalten zwischen dem Reihenschaltungsmodus R und dem Parallelschaltungsmodus unterbleibt.

In einer ersten Ausführung (vgl. Fig. 1, Fig. 2) ist das Mehrwegeventil 14 in Gestalt eines 4/2-Wegeventils ausgebildet, über welches sich die zuvor beschriebenen Systemmodi und Ventilstellungen einstellen bzw. ansteuern lassen. Dabei ist im Kühlkreislauf 6 stromabwärts des E-Motors 12 ferner ein weiteres Mehrwegeventil 18 in Gestalt eines 3/2-Wegeventils vorgesehen, dessen Abfluss bzw. Ausgang a^{l} mit dem Zufluss bzw. Eingang a des 4/2-Wegeventils 14 fluidisch verbunden ist. Auch das Mehrwegeventil 18 ist Teil einer weiteren Aktuatoreinheit bzw. Kühlwassersteuerventileinheit, die als solche auch eine Antriebseinheit mit einem Elektrostellmotor sowie eine Steuereinheit zur Steuerung des Elektrostellmotors umfasst.

Mittels des 3/2-Wegeventils 18 lässt sich einen Kühlflüssigkeitsstrom wahlweise über einen Pfad 22 mit einem Radiator bzw. Kühler 24 und/oder einen dazu parallelen Pfad 20 - Bypass-Pfad 20 - zur Umgehung des Radiators 24 leiten.

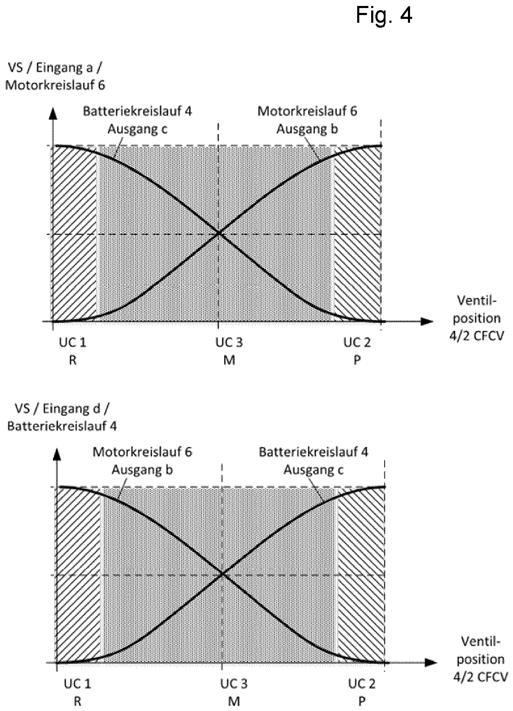

Fig. 4 veranschaulicht die in Bezug auf das 4/2-Wegeventil der ersten Ausführung einstellbaren Volumenströme VS. Dabei werden in der linken Graphik der Eingang a und die beiden Ausgänge b, c betrachtet. In der rechten Graphik hingegen werden Eingang d und die beiden Ausgänge b, c betrachtet. In den beiden Graphiken sind jeweils ein linker und rechter Bereich ohne eine signifikante Änderung bezüglich der Volumenströme dargestellt. Der linke Bereich beschreibt dabei den Modus UC1 bzw. die Reihenschaltung R. Der rechte Bereich hingegen beschreibt den Modus UC2 bzw. die Parallelschaltung P.

Zwischen diesen beiden Modi ist ein mittlerer Bereich mit einer Vielzahl von Zwischenstellungen des Ventils 14 ansteuerbar, um eine bedarfsgerechte Vermischung der Kühlflüssigkeitsströme der Kühlkreisläufe 4, 6 herbeizuführen (Mischmodus M = UC3). Grundsätzlich können dabei diskrete Zwischenstellungen gestuft eingestellt werden. Alternativ dazu können die Zwischenstellungen aber auch stufenlos bzw. kontinuierlich über den gesamten mittleren Bereich eingestellt werden, um eine noch genauere Regelung der Temperatur sowohl der Batterie 10 als auch des E-Motors 12 zu ermöglichen.

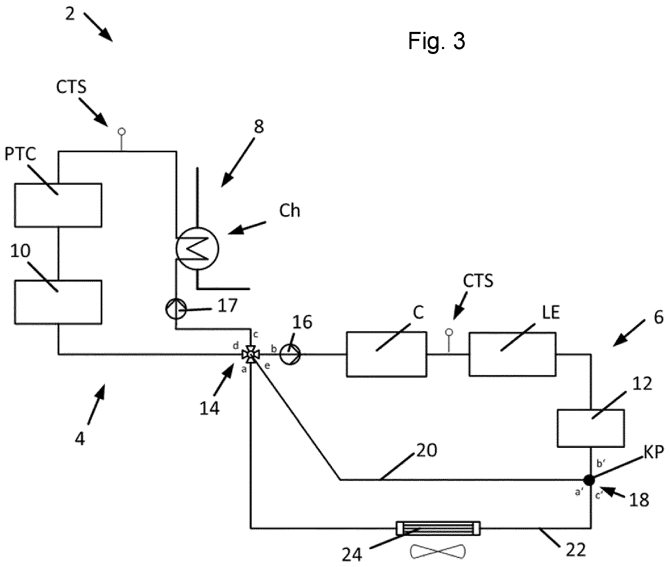

In einer dazu alternativen, zweiten Ausführung (vgl. Fig. 3) ist das Mehrwegeventil 14 in Gestalt eines 5/3-Wegeventils ausgebildet. Dabei muss man sich auch einen aus der Ebene der Fig. 3 herausragenden Zufluss bzw. Eingang e des 5/3-Wegeventils vorstellen, der als solcher über einen Bypass-Pfad 20 mit einem Knotenpunkt KP (bzw. dessen Abfluss a^{l}) stromabwärts des E-Motors 12 fluidisch verbunden ist, wobei dem Knotenpunkt KP sowohl der Bypass-Pfad 20 als auch ein dazu paralleler Pfad 22 mit einem Radiator 24 entspringt. Der Radiatorpfad 22 verbindet den Knotenpunkt KP (bzw. dessen Abfluss c^{l}) fluidisch mit dem Zufluss bzw. Eingang a des 5/3-Wegeventils.

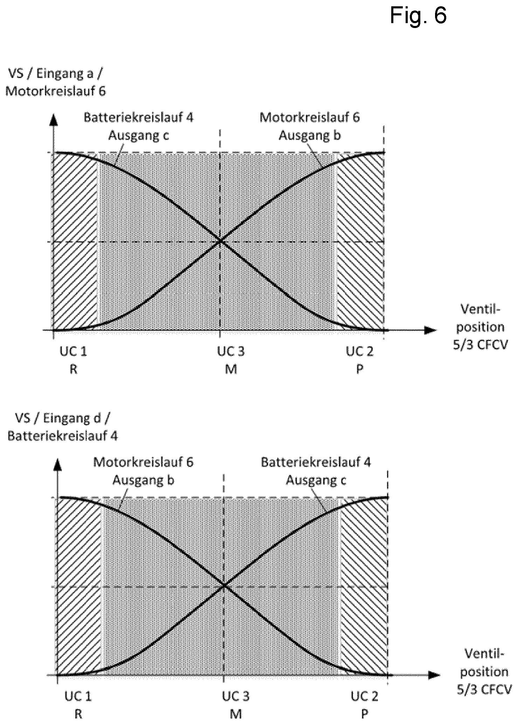

Fig. 6 veranschaulicht dabei - analog zur Fig. 4 - die in Bezug auf das 5/3-Wegeventil der zweiten Ausführung einstellbaren Volumenströme VS. Dabei werden in der linken Graphik der Eingang a und die beiden Ausgänge b, c betrachtet. In der rechten Graphik hingegen werden Eingang d und die beiden Ausgänge b, c betrachtet. Auch in diesen beiden Graphiken sind jeweils ein linker und rechter Bereich ohne eine signifikante Änderung bezüglich der Volumenströme dargestellt. Der linke Bereich beschreibt dabei den Modus UC1 bzw. die Reihenschaltung R. Der rechte Bereich hingegen beschreibt den Modus UC2 bzw. die Parallelschaltung P.

Zwischen diesen beiden Modi ist ein mittlerer Bereich mit einer Vielzahl von Zwischenstellungen des Ventils 14 ansteuerbar, um eine bedarfsgerechte Vermischung der Kühlflüssigkeitsströme der Kühlkreisläufe 4, 6 herbeizuführen (Mischmodus M = UC3). Analog zum zuvor Ausgeführten können dabei grundsätzlich diskrete Zwischenstellungen gestuft eingestellt werden. Alternativ dazu können die Zwischenstellungen auch stufenlos bzw. kontinuierlich über den gesamten mittleren Bereich eingestellt werden, um eine noch genauere Regelung der Temperatur sowohl der Batterie 10 als auch des E-Motors 12 zu ermöglichen.

In Bezug auf die beiden vorgeschlagenen Ausführungen lässt sich durch den zusätzlichen Pfad 20 in einer entsprechenden Ventilstellung des 3/2-Wegeventils 18 (gemäß der ersten Ausführung) oder in einer entsprechenden Ventilstellung des 5/3-Wegeventils (gemäß der zweiten Ausführung) - ein **vierter Modus** des Systems (Use Case 4, kurz: UC4 = **Bypass-Modus** B mit Reduktion des hydraulischen Widerstands & maximaler Wärmerückgewinnung) einstellen, bei dem ein hydraulischer Widerstand verringert und zugleich eine maximale Wärmerückgewinnung zur Erwärmung der Batterie 10 ermöglicht wird.

Über den Pfad 22 hingegen lässt sich zusätzlich oder alternativ dazu in einer entsprechenden Ventilstellung des 3/2-Wegeventils 18 (ersten Ausführung) oder des 5/3-Wegeventils (zweite Ausführung) ein **fünfter Modus** des Systems (Use Case 5, kurz: UC5 = selektiver Überhitzungsschutz) einstellen, bei dem durch eine Entwärmung über den Radiator 24 eine Überhitzung der Batterie 10 vermieden wird.

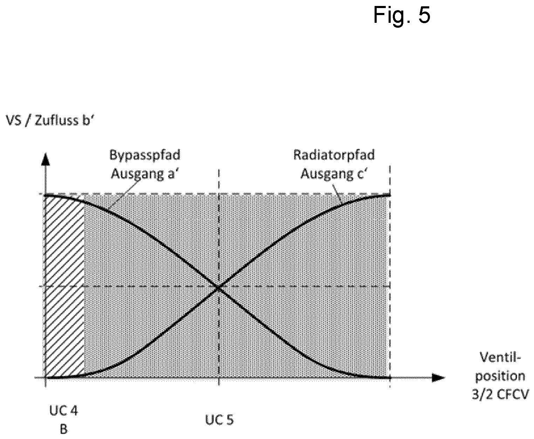

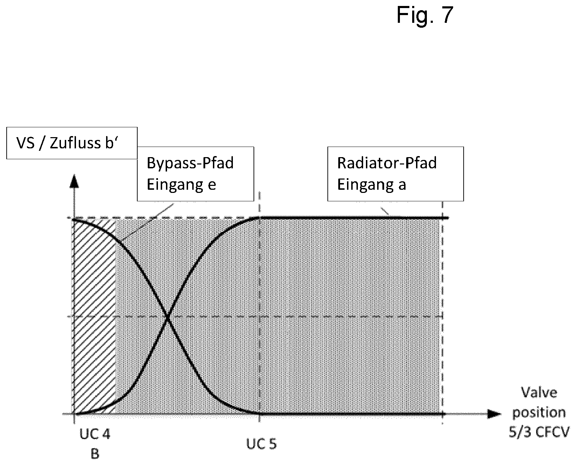

Die Graphik in Fig. 5 veranschaulicht dabei die in Bezug auf das 3/2-Wegeventil der ersten Ausführung einstellbaren Volumenströme VS, wohingegen die Graphik Fig. 7 die in Bezug auf das 5/3-Wegeventil der zweiten Ausführung einstellbaren Volumenströme VS veranschaulicht. In Fig. 5 werden dabei der Eingang b^{l} und die beiden Ausgänge a^{l}, c^{l} des 3/2-Wegeventils betrachtet. In Fig. 7 hingegen werden die Volumenströme VS durch die Eingänge a, e des 5/3-Wegeventils beschrieben, und zwar ausgehend vom Volumenstrom VS durch den Zufluss b^{l} zum Knotenpunkt KP stromabwärts des E-Motors 12, an welchem der Bypass-Pfad 20 sowie der Radiatorpfad 22 entspringen.

Die Graphik in Fig. 7 ist gegenüber der Graphik in Fig. 5 gestaucht. Dies liegt daran, dass im Fall der zweiten Ausführung kein zweites, separates Mehrwegeventil gegeben ist, welches unabhängig vom ersten Mehrwegeventil geschaltet werden kann. Insofern entfällt in Bezug auf die Fig. 7 gewissermaßen ein Stellfreiheitsgrad, so dass ein Schließen des Eingangs a mit einem Öffnen des Eingangs e einhergeht und umgekehrt.

## Patentansprüche

1. Thermomanagementsystem (2) zur Verwendung in einem Fahrzeug, wobei das Thermomanagementsystem (2) einen ersten Kühlkreislauf (4) für eine Batterie (10) und einen zweiten Kühlkreislauf (6) für einen E-Motor (12) zum Antrieb des Fahrzeugs umfasst, wobei die beiden Kühlkreisläufe (4, 6) mittels eines Mehrwegeventils (14) in einem ersten Modus des Systems (2) und in einer ersten Ventilstellung des Mehrwegeventils (14) in Reihe oder in einem zweiten Modus des Systems (2) und in einer zweiten Ventilstellung des Mehrwegeventils (14) parallel zueinander geschaltet sind,
**dadurch gekennzeichnet, dass**
in einem dritten Modus des Systems (2) und in einer dritten Ventilstellung das Mehrwegeventil (14) eine Zwischenstellung einnimmt, in welcher sich die Kühlflüssigkeitsströme der beiden Kühlkreisläufe (4, 6) miteinander bedarfsgerecht vermischen.

2. Thermomanagementsystem (2) nach Anspruch 1, **dadurch gekennzeichnet, dass** das Mehrwegeventil (14) in Gestalt eines 4/2-Wegeventils ausgebildet ist.

3. Thermomanagementsystem (2) nach Anspruch 2, **dadurch gekennzeichnet, dass** im zweiten Kühlkreislauf (6) stromabwärts des E-Motors (12) ein weiteres Mehrwegeventil (18) vorgesehen ist, welches einen Kühlflüssigkeitsstrom wahlweise über einen Pfad (22) mit einem Radiator (24) und/oder einen dazu parallelen Pfad 20 (Bypass-Pfad 20) zur Umgehung des Radiators (24) leitet.

4. Thermomanagementsystem (2) nach Anspruch 3, **dadurch gekennzeichnet, dass** das Mehrwegeventil (18) in Gestalt eines 3/2-Wegeventils ausgebildet ist.

5. Thermomanagementsystem (2) nach Anspruch 1, **dadurch gekennzeichnet, dass** das Mehrwegeventil (14) in Gestalt eines 5/3-Wegeventils ausgebildet ist, welches mit einem Bypass-Pfad (20) des zweiten Kühlkreislaufs (6) zur Umgehung eines Radiators (24) sowie mit einem dazu parallelen Pfad (22) mit einem Radiator (24) fluidisch verbunden ist, wobei der Bypass-Pfad (20) sowie der Radiatorpfad (22) einem Knotenpunkt (KP) stromabwärts des E-Motors (12) entspringen.

6. Thermomanagementsystem (2) nach einem der Ansprüche 1 bis 5, **dadurch gekennzeichnet, dass** die dritte Ventilstellung aus einer Mehrzahl von möglichen Zwischenstellungen einstellbar ist.

7. Thermomanagementsystem (2) nach Anspruch 6, **dadurch gekennzeichnet, dass** die einzelnen Zwischenstellungen gestuft oder stufenlos einstellbar sind.

8. Fahrzeug mit einem Thermomanagementsystem (2) nach einem der Ansprüche 1 bis 7.

9. Verfahren zum Betreiben zweier Kühlkreisläufe (4, 6) eines Thermomanagementsystems (2) nach einem der Ansprüche 1 bis 7, wobei ein erster Kühlkreislauf (4) für eine Batterie (10) und ein zweiter Kühlkreislauf (6) für einen E-Motor (12) zum Antrieb des Fahrzeugs vorgesehen wird, wobei die beiden Kühlkreisläufe (4, 6) mittels eines Mehrwegeventils (14) in einem ersten Modus des Systems (2) und in einer ersten Ventilstellung des Mehrwegeventils (14) in Reihe oder in einem zweiten Modus des Systems (2) und in einer zweiten Ventilstellung des Mehrwegeventils (14) parallel zueinander geschaltet werden,
**dadurch gekennzeichnet, dass**
in einem dritten Modus des Systems (2) und in einer dritten Ventilstellung das Mehrwegeventil (14) in eine Zwischenstellung geschaltet wird, in welcher die Kühlflüssigkeitsströme der beiden Kühlkreisläufe (4, 6) miteinander bedarfsgerecht vermischt werden.

10. Verfahren nach Anspruch 9, **dadurch gekennzeichnet, dass** als Mehrwegeventil (14) ein 4/2-Wegeventil verwendet wird.

11. Verfahren nach Anspruch 10, **dadurch gekennzeichnet, dass** im zweiten Kühlkreislauf (6) stromabwärts des E-Motors (12) ein weiteres Mehrwegeventil (18) verwendet wird, durch welches ein Kühlflüssigkeitsstrom wahlweise über einen Pfad (22) mit einem Radiator (24) und/oder einen dazu parallelen Pfad 20 (Bypass- Pfad 20) zur Umgehung des Radiators (24) geleitet wird.

12. Verfahren nach Anspruch 11, **dadurch gekennzeichnet, dass** für das weitere Mehrwegeventil (18) ein 3/2-Wegeventil verwendet wird.

13. Verfahren nach Anspruch 9, **dadurch gekennzeichnet, dass** als Mehrwegeventil (14) ein 5/3-Wegeventils verwendet wird, welches mit einem Bypass-Pfad (20) des zweiten Kühlkreislaufs (6) zur Umgehung eines Radiators (24) sowie mit einem dazu parallelen Pfad (22) mit einem Radiator (24) fluidisch verbunden wird, wobei der Bypass-Pfad (20) sowie der Radiatorpfad (22) einem Knotenpunkt (KP) stromabwärts des E-Motors (12) entspringen.

14. Verfahren nach einem der Ansprüche 9 bis 13, **dadurch gekennzeichnet, dass** die dritte Ventilstellung aus einer Mehrzahl von möglichen Zwischenstellungen eingestellt wird.

15. Verfahren nach Anspruch 14, **dadurch gekennzeichnet, dass** die einzelnen Zwischenstellungen gestuft oder stufenlos eingestellt werden.

16. Verfahren nach einem der Ansprüche 11 bis 15, **dadurch gekennzeichnet, dass** ein vierter Modus (bzw. Bypass-Modus) und/oder ein fünfter Modus des Systems eingestellt wird, wobei im vierten Modus zur Erwärmung der Batterie (10) Kühlflüssigkeit über den Bypass-Pfad (20) geleitet wird, wohingegen im fünften Modus zur Entwärmung der Batterie (10) Kühlflüssigkeit über den Radiatorpfad (22) geleitet wird.

17. Computerprogrammprodukt, umfassend Befehle, die bei der Ausführung des Programms durch einen Computer - abhängig von einer Temperaturüberwachung der beiden Kühlkreisläufe (4, 6) nach einem der Ansprüche 1 bis 7 - diesen veranlassen, das Verfahren nach einem der Ansprüche 9 bis 16 auszuführen.

18. Computerlesbares Speichermedium, umfassend Befehle, die bei der Ausführung durch einen Computer - abhängig von einer Temperaturüberwachung der beiden Kühlkreisläufe (4, 6) nach einem der Ansprüche 1 bis 7 - diesen veranlassen, das Verfahren nach einem der Ansprüche 9 bis 16 auszuführen.

## Claims

1. Thermal management system (2) for use in a vehicle, wherein the thermal management system (2) comprises a first cooling circuit (4) for a battery (10) and a second cooling circuit (6) for an electric motor (12) for driving the vehicle, wherein by means of a multi-way valve (14) the two cooling circuits (4, 6) are connected to each other in series in a first mode of the system (2) and in a first valve position of the multi-way valve (14) or in parallel in a second mode of the system (2) and in a second valve position of the multi-way valve (14), **characterized in that**
in a third mode of the system (2) and in a third valve position, the multi-way valve (14) takes up an intermediate position in which the coolant flows of the two cooling circuits (4, 6) are mixed with each other as needed.

2. Thermal management system (2) according to Claim 1, **characterized in that** the multi-way valve (14) is designed in the form of a 4/2-way valve.

3. Thermal management system (2) according to Claim 2, **characterized in that** provided in the second cooling circuit (6) downstream of the electric motor (12) is a further multi-way valve (18), which conducts a coolant flow optionally via a path (22) with a radiator (24) and/or via a path (20) parallel thereto (bypass path 20) for bypassing the radiator (24).

4. Thermal management system (2) according to Claim 3, **characterized in that** the multi-way valve (18) is designed in the form of a 3/2-way valve.

5. Thermal management system (2) according to Claim 1, **characterized in that** the multi-way valve (14) is designed in the form of a 5/3-way valve which is fluidically connected to a bypass path (20) of the second cooling circuit (6) for bypassing a radiator (24) and to a path (22) parallel thereto with a radiator (24), wherein the bypass path (20) and the radiator path (22) originate from a junction (KP) downstream of the electric motor (12).

6. Thermal management system (2) according to one of Claims 1 to 5, **characterized in that** the third valve position can be set from a plurality of possible intermediate positions.

7. Thermal management system (2) according to Claim 6, **characterized in that** the individual intermediate positions can be set in increments or infinitely variably.

8. Vehicle with a thermal management system (2) according to one of Claims 1 to 7.

9. Method for operating two cooling circuits (4, 6) of a thermal management system (2) according to one of Claims 1 to 7, wherein a first cooling circuit (4) is provided for a battery (10) and a second cooling circuit (6) for an electric motor (12) for driving the vehicle, wherein by means of a multi-way valve (14) the two cooling circuits (4, 6) are connected to each other in series in a first mode of the system (2) and in a first valve position of the multi-way valve (14) or in parallel in a second mode of the system (2) and in a second valve position of the multi-way valve (14),
**characterized in that**
in a third mode of the system (2) and in a third valve position, the multi-way valve (14) is switched into an intermediate position in which the coolant flows of the two cooling circuits (4, 6) are mixed with each other as needed.

10. Method according to Claim 9, **characterized in that** a 4/2-way valve is used as the multi-way valve (14).

11. Method according to Claim 10, **characterized in that** used in the second cooling circuit (6) downstream of the electric motor (12) is a further multi-way valve (18), through which a coolant flow is conducted optionally via a path (22) with a radiator (24) and/or via a path (20) parallel thereto (bypass path 20) for bypassing the radiator (24).

12. Method according to Claim 11, **characterized in that** a 3/2-way valve is used for the further multi-way valve (18).

13. Method according to Claim 9, **characterized in that** used as the multi-way valve (14) is a 5/3-way valve which is fluidically connected to a bypass path (20) of the second cooling circuit (6) for bypassing a radiator (24) and to a path (22) parallel thereto with a radiator (24), wherein the bypass path (20) and the radiator path (22) originate from a junction (KP) downstream of the electric motor (12).

14. Method according to one of Claims 9 to 13, **characterized in that** the third valve position is set from a plurality of possible intermediate positions.

15. Method according to Claim 14, **characterized in that** the individual intermediate positions are set in increments or infinitely variably.

16. Method according to one of Claims 11 to 15, **characterized in that** a fourth mode (or bypass mode) and/or a fifth mode of the system is set, wherein, in the fourth mode, coolant is conducted via the bypass path (20) for heating the battery (10), whereas, in the fifth mode, coolant is conducted via the radiator path (22) for cooling the battery (10).

17. Computer program product comprising commands which, when the program is executed by a computer - depending on a temperature monitoring of the two cooling circuits (4, 6) according to one of Claims 1 to 7 - cause this to carry out the method according to one of Claims 9 to 16.

18. Computer-readable storage medium, comprising commands which, when executed by a computer - depending on a temperature monitoring of the two cooling circuits (4, 6) according to one of Claims 1 to 7 - cause these to carry out the method according to one of Claims 9 to 16.

## Revendications

1. Système de gestion thermique (2) destiné à être utilisé dans un véhicule, le système de gestion thermique (2) comprenant un premier circuit de refroidissement (4) pour une batterie (10) et un deuxième circuit de refroidissement (6) pour un moteur électrique (12) destiné à entraîner le véhicule, les deux circuits de refroidissement (4, 6) étant montés en série au moyen d'une vanne multivoie (14) dans un premier mode du système (2) et dans une première position de la vanne multivoie (14), ou sont montés en parallèle dans un deuxième mode du système (2) et dans une deuxième position de la vanne multivoie (14),
**caractérisé en ce que**
dans un troisième mode du système (2) et dans une troisième position de la vanne, la vanne multivoie (14) prend une position intermédiaire dans laquelle les flux de liquide de refroidissement des deux circuits de refroidissement (4, 6) se mélangent l'un à l'autre selon les besoins.

2. Système de gestion thermique (2) selon la revendication 1, **caractérisé en ce que** la vanne multivoie (14) est conçue sous la forme d'une vanne 4/2 voies.

3. Système de gestion thermique (2) selon la revendication 2, **caractérisé en ce qu'**une autre vanne multivoie (18) est prévue dans le deuxième circuit de refroidissement (6) en aval du moteur électrique (12), qui dirige un flux de liquide de refroidissement au choix via un chemin (22) comprenant un radiateur (24) et/ou via un chemin (20) (chemin de dérivation 20) parallèle à celui-ci, pour contourner le radiateur (24).

4. Système de gestion thermique (2) selon la revendication 3, **caractérisé en ce que** la vanne multivoie (18) est conçue sous la forme d'une vanne 3/2 voies.

5. Système de gestion thermique (2) selon la revendication 1, **caractérisé en ce que** la vanne multivoie (14) est conçue sous la forme d'une vanne 5/3, qui est reliée fluidiquement à un chemin de dérivation (20) du deuxième circuit de refroidissement (6) pour contourner un radiateur (24) ainsi qu'à un chemin (22) parallèle à celui-ci comprenant un radiateur (24), le chemin de dérivation (20) et le chemin à radiateur (22) partant d'un point nodal (KP) situé en aval du moteur électrique (12).

6. Système de gestion thermique (2) selon l'une des revendications 1 à 5, **caractérisé en ce que** la troisième position de la vanne est apte à être réglée parmi une pluralité de positions intermédiaires possibles.

7. Système de gestion thermique (2) selon la revendication 6, **caractérisé en ce que** les différentes positions intermédiaires sont réglables par paliers ou de façon continue.

8. Véhicule équipé d'un système de gestion thermique (2) selon l'une des revendications 1 à 7.

9. Procédé pour faire fonctionner deux circuits de refroidissement (4, 6) d'un système de gestion thermique (2) selon l'une des revendications 1 à 7, dans lequel un premier circuit de refroidissement (4) est prévu pour une batterie (10) et un deuxième circuit de refroidissement (6) est prévu pour un moteur électrique (12) destiné à entraîner le véhicule, les deux circuits de refroidissement (4, 6) étant commutés en série au moyen d'une vanne multivoie (14) dans un premier mode du système (2) et dans une première position de la vanne multivoie (14) ou en parallèle dans un deuxième mode du système (2) et dans une deuxième position de la vanne multivoie (14),
**caractérisé en ce que**
dans un troisième mode du système (2) et dans une troisième position de la vanne, la vanne multivoie (14) est commutée dans une position intermédiaire dans laquelle les flux de liquide de refroidissement des deux circuits de refroidissement (4, 6) sont mélangés en fonction des besoins.

10. Procédé selon la revendication 9, **caractérisé en ce qu'**une vanne 4/2 est utilisée comme vanne multivoie (14).

11. Procédé selon la revendication 10, **caractérisé en ce qu'**une autre vanne multivoie (18) est utilisée dans le deuxième circuit de refroidissement (6) en aval du moteur électrique (12), par laquelle un flux de liquide de refroidissement est dirigé au choix via un chemin (22) comprenant un radiateur (24) et/ou via un chemin (20) parallèle à celui-ci (chemin de dérivation 20), pour contourner le radiateur (24).

12. Procédé selon la revendication 11, **caractérisé en ce qu'**une vanne multivoie 3/2 est utilisée pour ladite autre vanne multivoie (18).

13. Procédé selon la revendication 9, **caractérisé en ce qu'**il est utilisé comme vanne multivoie (14) une vanne 5/3, qui est reliée fluidiquement à un chemin de dérivation (20) du deuxième circuit de refroidissement (6) pour contourner un radiateur (24) ainsi qu'à un chemin (22) parallèle à celui-ci comprenant un radiateur (24), le chemin de dérivation (20) et le chemin à radiateur (22) partant d'un point nodal (KP) situé en aval du moteur électrique (12).

14. Procédé selon l'une des revendications 9 à 13, **caractérisé en ce que** la troisième position de la vanne est réglée à partir d'une pluralité de positions intermédiaires possibles.

15. Procédé selon la revendication 14, **caractérisé en ce que** les différentes positions intermédiaires sont réglées par paliers ou de façon continue.

16. Procédé selon l'une des revendications 11 à 15, **caractérisé en ce qu'**un quatrième mode (ou mode de dérivation) et/ou un cinquième mode du système sont définis ; dans le quatrième mode, du liquide de refroidissement est acheminé via le chemin de dérivation (20) pour chauffer la batterie (10), tandis que dans le cinquième mode, du liquide de refroidissement est acheminé via le chemin à radiateur (22) pour refroidir la batterie (10).

17. Programme informatique comprenant des instructions qui, lors de l'exécution du programme par un ordinateur - en fonction d'une surveillance de la température des deux circuits de refroidissement (4, 6) selon l'une des revendications 1 à 7 **-,** amènent l'ordinateur à mettre en œuvre le procédé selon l'une des revendications 9 à 16.

18. Support de stockage lisible par ordinateur, comprenant des instructions qui, lors de l'exécution par un ordinateur - en fonction d'une surveillance de la température des deux circuits de refroidissement (4, 6) selon l'une des revendications 1 à 7 - amènent l'ordinateur à mettre en œuvre le procédé selon l'une des revendications 9 à 16.
